# EUROPEAN PATENT APPLICATION

(11) **EP 3 017 787 A1**
(43) Date of publication of application: **11.05.2016**
(21) Application number: 14192327.6
(22) Date of filing: 07.11.2014
(51) Int. Cl.: A61C 13/00, A61C 8/00

(54) **Modeling element with indicator**

(71) Applicant: Nobel Biocare Services AG, 8302 Kloten (CH)
(72) Inventor: Haus, Adrian, 8050 Zürich (CH); Prati, Rene, CH 8058 Zürich-Flughafen (CH)
(74) Representative: Capré, Didier

(57) **Abstract**

The present invention relates to a modeling element (1) for creating a master geometry which represents a final dental restoration, the modeling element comprising a coronal end (2), an apical end (3), a coupling portion (10) and a modeling portion (20) with an initial shape and dimension. At least part of the modeling portion further comprises an indicator (30) defining the maximum allowable removal of material from the modeling element. The present invention also relates to a method for creating a model of a dental restoration based on such a modeling element.

## Description

### FIELD OF THE INVENTION

The present invention relates to a modeling element for modeling a dental restoration as well as to a method for creating a dental restoration on the basis of said modeling element.

### RELATED ART

One technique commonly used during the creation of a dental restoration for an implant is to create a model of the dental restoration on the basis of a modeling element. The modeling element is a part with a coupling portion that is configured to be connected to an implant by means of a fastening element. Afterwards the model may be used to create a form for a casting process.

Generally, the creation of the model is done manually, i. e. the dental expert such as a dentist or a dental technician manually sculptures the dental restoration taking into account the natural teeth of a patient. Afterwards, the model may be produced on site or sent to a production facility. The latter is particularly the case if the model comprises more than one tooth and connects to more than one implant. In any case, it is important that during the design of the dental restoration minimal standards in terms of the dimensions and shape of the model are met so that the required strength of the final dental restoration is obtained.

This is one of the reasons why these models are commonly created on the basis of prefabricated modeling elements such as the one disclosed in EP2 226034 B1. The wax model base in EP 2 226 034 B1 for creating an abutment to be connected to a dental implant comprises an engagement portion for engagement with a locking portion of an implant fixture analog. For creating a wax model, the wax model base includes a building portion on which wax is applied to design the part of the abutment that is intended for contact with the gingiva of a patient. Coronally of the building portion, wax is also applied on a cylindrical portion to build up a core portion similar to a dental prosthesis. Both the building portion and the cylindrical portion each have a stepped portion to support the wax used to create the wax model of the abutment. The wax model base in EP 2 226 034 B1 is designed for creating a wax model of a front tooth as well as a molar tooth so that the wax model base is dimensioned to give sufficient support for any tooth of a patient's lower or upper set of teeth. This "one-size-fits-all" approach for the wax model base has the disadvantage that the size of the wax model base may not be suitable for particular patients or dental situations.

A modeling element constituted by a two-part model base is disclosed in US 2008/0153066 A1. Here, a casting abutment having a socket portion for fitting to an implant fixed by an occlusal screw is assembled with a modeling aid to constitute a basis for creating a prosthetic tooth. The modeling aid is placed on the casting abutment non-positively and tightly. After building up a model of the prosthesis, the prosthesis is produced by casting. Although the modeling aid allows for an adaptation of the model base to the individual dental situation of a patient, this adaptation is limited to the screw channel as a whole and does not concern other parts of the modeling aid.

### SUMMARY OF THE INVENTION

In view of this situation, one objective of the present invention is to provide a modeling element for creating a master geometry which represents the final dental restoration that can be adapted to a dental situation of the patient or for directly creating a temporary (also called provisional) dental restoration. However, along with this objective, the adaptation of the modeling element should still ensure the desired strength of the final dental restoration to be produced on the basis of said model or the desired strength of the temporary restoration.

At least these objectives are addressed by the present invention as defined in independent product claim 1 and independent method claim 11. In addition, the claims dependent on said claims specify further preferred embodiments of the invention.

More specifically, the present invention addresses the aforementioned objective by providing a modeling element for creating a master geometry of a dental restoration or for creating a temporary dental restoration. The modeling element comprises a coronal end, an apical end, a coupling portion and a modeling portion, wherein the modeling portion has an initial shape and dimension. Further, at least part of the modeling portion comprises an indicator defining the maximum allowable removal of material from the modeling element.

Thus, the present invention makes use of the safety margin included in the dimensions of the modeling element. This safety margin provides additional strength to a dental restoration to be produced on the basis of the modeling element. However, for certain dental situations, this invention allows a user to take of material of the modeling element so that the safety margin is reduced or even removed in order to optimize the fit of the dental restoration to the dental situation. In this respect, the indicator included in the modeling element prevents a user from locally removing too much material. Thus, the indicator avoids the production of a dental restoration that runs the risk of having insufficient strength for being fixated in the mouth of a patient.

In other words, the indicator defining the maximum allowable removal of material from the modeling element ensures a minimum allowable dimension corresponding to a desired minimum mechanical strength of the dental restoration to be produced. This applies to both additive as well as subtractive modeling. In case of additive modeling, the modeling element may be adapted by removing material to make the modeling element fit to a physical model of the patient's teeth or oral situation. Here, the modeling element forms part of the dental restoration's model. In case of subtractive modeling, the indicator prevents that the dental expert takes away too much material while modeling the shape and dimension of the dental restoration. Thus, in a subtractive model the modeling element preferably forms the model of the dental restoration. For both modeling techniques, the indicator of the modeling element provides feedback to the dental expert at which point the size of the modeling element should not be reduced any further.

Thanks to the feedback by the indicator, a suboptimal dental treatment can be prevented as well as additional costs due to repetitive modeling. The latter is particularly the case if the modeling of said dental restoration model and the production of the dental restoration takes place at different locations. For example, the finished model can be scanned. The data of the scanned model will then be transferred to a production facility, where the model may be double checked in terms of its shape and/or dimension. If the review of the data results in determining insufficient strength of the dental restoration, the modeling process has to be repeated, which results in an unwanted increase in costs and prolongation of treatment.

The dental restoration may be an abutment, a single prosthetic tooth to be fixed on an implant or multiple prosthetic teeth connected to each other and attached to at least two implants within a patient's oral cavity. Thus, the dental restoration may form at least a partial prosthesis replacing patient's teeth of the lower or upper jaw or a connecting element between an implant and prosthesis.

In a preferred embodiment of the present invention, the indicator is configured to provide tactile, audible and/or visual feedback upon removal of the maximum allowable amount of material from the modeling element.

Thus, if the maximum allowable amount of material is removed at one location, the indicator will signal to the dental expert that the minimum allowable dimension at said location has been reached. Which type or combination of feedback is provided may depend on the material of the modeling element or the tools used for modeling. For example, if material is taken off the modeling element using a process that causes a reduced visibility, such as during grinding, it may well be a better option to provide tactile or audible feedback. Tactile feedback may be provided by a change in hardness of the modeling element's material at the indicator. The same configuration may also be used to create audible feedback caused in combination with a tool while trying to remove material from the modeling element beyond said indicator. Visual feedback may, for example, be provided by a change in appearance of the modeling element's material at the indicator.

Advantageously, said different types of feedback provided by the indicator do not necessitate additional steps such as a measuring step in order to realize the limit until which the modeling element material may be removed. Instead, the feedback is given directly while the dental restoration is being modeled.

In another preferred embodiment, the minimum allowable dimension resulting from the maximum allowable removal of material defined by said indicator of said modeling element depends on the material properties of the dental restoration to be produced on the basis of said model.

This dependency links the modeling element and the dental restoration to be produced. More specifically, the indicator of the modeling element is defined dependent on the material properties of the dental restoration. Consequently, the indicator is able to provide optimum allowable dimensions for the dental restoration and, thus, for a defined predetermined strength.

In another particularly preferred embodiment the indicator indicates at least one removable section of the modeling element.

Here, the indicator does not only define the maximum allowable removal of material from the modeling element but also provides the dental expert with a continuous section of the modeling element that is preferably removed altogether. In other words, if necessary, the whole removable section can be removed to provide the minimum allowable dimensions of the modeling element. This particularly applies to the above-mentioned preparation of the modeling element during additive modeling. Preferably, after this modification, no more material should be removed at this section. As a result, this embodiment has the advantage that the maximum allowable removal of material is predetermined by the removable section and does not depend on the manual skills of the dental expert.

In a preferred embodiment of the present invention, the removable section is formed as a collar situated at a distal end of the modeling portion, said collar comprising a weak portion for separating said collar from the remaining modeling element.

The collar of the unmodified modeling element may advantageously prevent modeling mass from being applied to the coupling portion of the modeling element during additive modeling. In other words, the collar protects the adapter by preventing a change in geometry of the coupling portion that may result in a final dental restoration that does not fit the corresponding implant of a patient.

Although the weak portion in the present embodiment is applied to a collar, it may also or alternatively be applied to any other part of the geometry of the modeling element. The weak portion preferably allows manual tearing off of the removable section and/or is adapted to guide cutting through the weak portion in order to perform the maximum allowable removal of material from the modeling element.

Consequently, in this embodiment, the weak portion acts as indicator and may be constituted by a reduced cross-section between the removable material and the remaining modeling element such as a recess, holes within the material, different material properties and/or different materials.

A removable section is constituted by said collar, wherein said collar surrounds at least part of the modeling element, preferably in a plane perpendicular to the longitudinal axis extending from the apical end to the coronal end of the modeling element.

In a preferred embodiment of the present invention, the weak portion is formed by a reduced cross-section at the base of the collar, where said collar is attached to the remaining part of the modeling element.

In this embodiment, the reduced cross-section of the collar forms a predetermined breaking point that allows for an easy removal of the collar.

The cross-section of the collar may be reduced by a recess that is preferably provided at the coronal side of said collar so that the opening of the recess faces the coronal direction. In this configuration, the recess helps preventing modeling mass from affecting the geometry of the coupling portion.

At least due to the recess, the collar has a cross-section which tapers in the direction towards the center of the modeling element, as seen in a plane going through the longitudinal axis of the modeling element. In other words, the thickness of the collar decreases from its rim towards the center of the modeling element, wherein the thickness of the collar reaches its minimum at or nearby (due to chamfering or rounding off) its base, where the collar is merged with the remaining part of the modeling element.

In another preferred embodiment of the present invention, the collar defines or comprises an engagement recess extending in the longitudinal direction of said modeling element, preferably throughout said collar.

The engagement recess of this embodiment facilitates the removal of said collar by hand or with the help of a tool since the engagement recess makes it easier to grab, hold on to and tear off said collar.

In yet another embodiment of the present invention, the indicator is formed by a difference in material properties.

By providing the indicator of the modeling element at a location where material properties change or as a section with different material properties than the sections in contact with the remaining material of the modeling element, the indicator can cause tactile feedback, e.g. by different hardness or a void, audible feedback, e.g. by causing noise during modification as explained above, and/or visible feedback due to a different appearance of the modeling element's material, e.g. by a different color or saturation.

The different material properties may be realized with the same material or different materials. For example, the material properties may be adapted by providing the same material in a foamed state.

In one particularly preferred embodiment, the indicator indicates the maximum allowable removal of material by a void located at the border between the allowable amount of removable material and the remaining modeling element.

While the dental expert is removing material from the modeling element, the tool will enter the void resulting in tactile and, possibly, audible feedback. Since the void will also be visible to the dental expert, the indicator of this embodiment may provide for a combination of feedbacks. This results in a clearly perceivable signal at the point from where on no more material should be removed from the modeling element.

Further, the surface of the void on the side of the remaining modeling element with the allowable minimum dimensions may not be affected by the removal of material. This is particularly advantageous if said surface of the void is intended for a positive fit. For example, such a surface for a positive fit underneath the original surface of the modeling element may allow the adapted modeling element to be inserted deeper into the corresponding implant or implant analog.

The void may be formed by geometries like channels or spheres, or porous materials. Preferably, the void is fully embedded within the material. However, production methods for the modeling element may make it necessary to provide an access to the void, e.g. in the case of casting.

In another preferred embodiment of the present invention, the indicator extends into the coupling portion.

This embodiment provides additional ways to adapt the modeling element to a particular dental situation or dental treatment. One way for an additional adaptation has already been described in relation to a previous embodiment. Further, there may be surface available on the coupling portion that is only necessary in combination with a particular type of implant or is also simply over dimensioned.

The present invention also provides a method for creating a master geometry of a dental restoration or for creating a temporary restoration based on a modeling element, the method comprising the steps of providing a physical model of at least part of the oral situation of a patient, the model comprising at least one implant analog or at least one implant, providing a modeling element comprising an indicator defining the maximum allowable removal of material from said modeling element, attaching said modeling element to said implant analog or to said implant, creating said master geometry which represents the final dental restoration or creating said temporary restoration, removing material from said modeling element until said indicator provides feedback that the minimum allowable dimension has been reached at a location of removal of material from said modeling element.

The method according to the invention provides the dental expert with a prefabricated modeling element for a dental restoration that can be adapted, particularly, if an exceptional dental situation occurs. More specifically, depending on the space available at the implantation site or the direction and/or position of the implant within the bone tissue, it may be necessary to adapt the shape and/or dimension of the modeling element in order to provide an optimum dental restoration.

If such a situation occurs, the dental expert can remove material or a section of the modeling element to make the dental restoration fit to the natural teeth of a patient. By locally removing material, at maximum until the indicator of said modeling element indicates that the maximum allowable removal of material has been reached, the dental expert makes use of at least a reduction of the safety factor of the modeling element, however, without risking insufficient strength of the dental restoration to be produced on the basis of the resulting model. This is particularly useful in a situation, in which the dental expert already modeled part of a dental restoration before realizing that an adaptation of the modeling element is necessary to continue. With the present method, the expert may simply continue by adapting the modeling element instead of having to start all over again.

Naturally, the implant analog of this method may also be an implant. Further, attachment of the modeling element to the model of the patient's set of teeth may be performed before during or after modeling the dental restoration. Particularly in the case of subtractive modeling, the fixation to the implant analog may occur for the first time during or at the end of modeling.

In another preferred embodiment of the present invention's method said modeling element is a sleeve and the model is created by adding modeling material or a temporary restoration material, preferably wax or preferably cement composite or the like, to said sleeve.

The technique of a wax-up model to create a dental restoration, particularly a prosthetic tooth or part of a denture, is well established in the art and readily available in most dental offices and laboratories. However, the technique according to the present invention is rendered more efficient by using a modeling element from which material may be removed in order to adapt the modeling element to an implantation site of a patient that could not be treated with the modeling element in its initial shape and/or size.

In another particularly preferred embodiment of the present invention, said method further comprises the step of scanning said model of the dental restoration to create a CAD/CAM-model for producing the dental restoration or the step of installing the temporary restoration in a patient's mouth.

By scanning said model of the dental restoration it is possible to perform the modeling in a lab or office with limited equipment, send the data of the scan to a production facility and perform the production of the dental restoration with state-of-the-art equipment. Typically, the dental restoration will be produced by milling machines or other types of machining. However, it is also possible to use a casting process for creating the individual dental restoration.

In another preferred embodiment of the present invention, the parameters of said CAD/CAM-model of the dental restoration are matched to the production technique to be used for producing the dental restoration.

This aspect of the present invention allows for optimum machining or production of the dental restoration. It may even be possible to choose the appropriate production method based on the CAD model and the material to be used.

### BRIEF DESCRIPTION OF THE DRAWINGS

The following description of the present invention's preferred embodiments may be best understood by taking the accompanying drawings in consideration. Within the figures of these drawings, same reference numerals are used for features that are identical or have an identical or similar function.
Figure 1a shows a modeling element according to the present invention, embodied as a wax-up sleeve to be used in creating a dental restoration, particularly an individual tooth;
Figure 1b shows an enlarged view of the collar of the modeling element of figure 1a;
Figure 2 shows another modeling element according to the present invention, which is similar to the embodiment shown in figure 1a but is particularly intended for modeling and supporting the model of multiple teeth; and
Figure 3 is yet another modeling element according to the present invention that utilizes a channel and different material properties as indicator for the maximum allowable removal of material from the modeling element.

### DESCRIPTION OF PREFERRED EMBODIMENTS

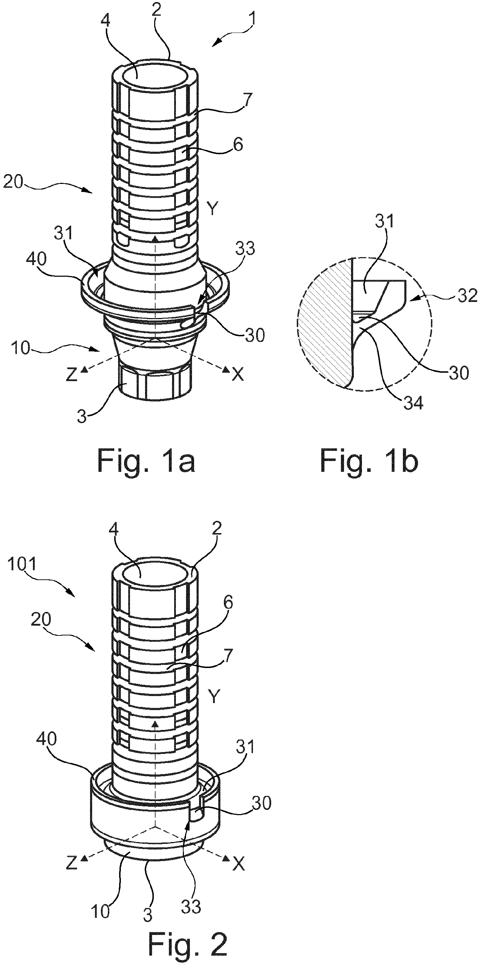

Figure 1a shows a modeling element 1 according to a first preferred embodiment. The skilled person will realize that the modeling element 1 is a sleeve or, more specifically, a wax-up sleeve on which the dental restoration is build up by applying wax to its outer surface. The skilled person will appreciate that other modeling materials than wax may be used for creating a model of the dental restoration.

The modeling element 1 has an elongated body with a coronal end 2 and an apical end 3. Along its longitudinal direction Y, the modeling element 1 comprises a modeling portion 20 and a coupling portion 10. The coupling portion 10 is configured to be connected to a corresponding coupling portion of a dental implant or a dental fixture (not shown). The coupling portion 10 may comprise an anti-rotation means in order to prevent said modeling element 1 or the finished dental restoration (not shown) from rotating relative to the dental implant or implant analogue.

The wax-up sleeve shown in figure 1a is used to create an additive model, i.e. wax is added to the surface of the wax-up sleeve in order to build up a model of a dental restoration. It should be appreciated, that a modeling element according to the invention may also be configured so that the model of the dental restoration is created by taking off material of modeling element 1, i.e. by using a subtractive modeling technique.

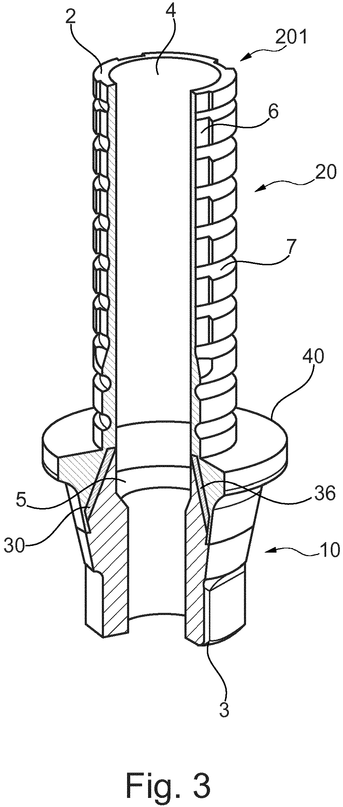

Returning to figure 1a, the modeling portion 20 comprises at its apical end a collar 40. Further, a screw channel 4 is provided throughout the modeling element 1 in its longitudinal direction Y. Within the screw channel, a shoulder 5 (see figure 3) provides a screw seat on which an occlusal screw (not shown) can be supported. The occlusal screw is used for fixing the modeling element 1 on an implant analog or an implant before, during and/or after applying modeling mass to the modeling element 1. Since the modeling element 1 forms part of the final dental restoration, the screw seat 5 (not shown in figure 1a) will also be present in the dental restoration that will be produced on the basis of the model created on the basis of modeling element 1.

The modeling portion 20 of the modeling element 1 may further be provided on its outer circumferential side with recesses extending in the longitudinal direction Y. These recesses 6 prevent the wax or temporary restoration material (such as cement, composite or the like) applied to modeling element 1 from rotating relative to said element 1. As a result, the orientation of the final dental restoration relative to the model and, thus, to the set of teeth of a patient is set if modeling is performed with the help of a physical model of at least a partial prosthesis replacing the patient's teeth (not shown).

In order to prevent any translational movement of the modeling mass along the longitudinal direction Y of the modeling element 1, the modeling portion 20 may comprise at least one circumferential recess or groove 7.

As already mentioned above, modeling is preferably performed in an environment simulating the dental situation of a patient. This is usually achieved by creating a model of at least part of the lower and/or upper set of teeth of the patient. Normally, the implantation site of the dental implant or the dental fixture includes an analog of the implant, which has the same position and orientation as in the patient's oral cavity. Naturally, the analog in the physical model of the patient's teeth may be replaced by a real implant. Then, modeling of the dental restoration is done relative to said model of the patient's teeth. As a result, the dental restoration closely resembles or is identical to the dental situation of the patient before treatment.

For modeling, the modeling element 1 shown in figure 1a comprises the aforementioned collar 40. During modeling, the collar 40 serves as support for the wax being applied to the outer surface of modeling portion 20. It also prevents liquid wax from flowing down onto the coupling portion 10. However, collar 40 of the embodiment shown in figure 1a also has another function, namely to act as a removable section 32. More specifically, collar 40 gives a dental expert the option to reduce the outer dimension of modeling element 1, if necessary. Such a situation may arise if there is not enough space between the teeth of the patient to attach said modeling element 1 onto the implant.

The dental expert has the option to remove the removable section 32 in its entirety or just part of it. In order to signal to the dental expert up to which extent the collar 40 may be removed, collar 40 is provided with an indicator 30. The indicator 30 is shown more closely in the enlarged view of figure 1b. As can be seen, the cross-section of collar 40 tapers down in the direction of the modeling element's body, as seen along a radial direction X, Z of the modeling element 1.

In the example of figure 1, the receding thickness of the collar 40 from the rim of said collar towards the center of the modeling element 1 is achieved by a circumferential recess or groove 31 facing the coronal direction of the wax-up sleeve. Although said recess 31 may additionally or alternatively also face the apical direction, facing coronally has the advantage that the collar 40 provides additional space for picking up liquid wax flowing down modeling portion 20.

The indicator 30 may be designed with a thickness that allows to manually tear off the collar 40. In other words, the indicator 30 acts as a weak portion or predetermined breaking point of the collar 40. Tearing off the collar is preferably done in one go. However, there may be additional weak portions provided throughout the collar in the longitudinal direction of the modeling element's body so that tearing off may take place in steps.

Although the indicator 30 in figures 1a and 1b is designed as a weak portion, it may also constituted by any other means known to the skilled person to create such a portion such as a perforation, a change in material properties, a different material, a transition between different materials etc. As shown in the enlarged view of figure 1a, the weak portion 34 directly borders to the remaining body of modeling element 1. More specifically, the weak portion 34 is near the elongated body of modeling element 1 due to chamfering or rounding. Nonetheless, tearing off collar 40 preferably completely removes said collar 40 from modeling element 1.

Naturally, the dental expert may also use a tool to remove at least part of collar 40 without tearing off, such as cutting or an abrasive method. In such a case, the recess 31 indicates to the dental expert how far material may be removed from the collar 40 or modeling element 1.

Further, the modeling element 1 in figure 1a comprises an engagement recess 33. Said engagement recess 33 provides an access point that facilitates tearing off or cutting off at least part of collar 40 from said modeling element 1. Said engagement recess 33 preferably extends throughout the whole collar 40 in the longitudinal direction Y of the modeling element 1 but at least up to the point so that the weak portion 34 is exposed to the engagement recess 33. More than one engagement recess 33 may serve to be able removing collar 40 in several pieces.

The sleeve 1 of figure 1a forms the basis for a tooth prosthesis or abutment. However, the dental restoration may also be a prosthesis that comprises several teeth such as a bridge, part of a denture or even a complete lower and/or upper denture of a patient. The dental restoration may also constitute any other connecting element used in dentistry to build up a superstructure.

If the dental restoration comprises more than one tooth, it generally requires at least two implants for fixation within the oral cavity of a patient. A sleeve that is specifically designed for such a dental restoration is shown in figure 2. The main difference of said sleeve is the design of its coupling portion 10. More specifically, the coupling portion 31 does not have an anti-rotation feature like the coupling portion 10 of the modeling element 1 shown in figure 1a.

Also, the engagement recess 33 does not extend throughout the whole collar in a radial direction X, Z as shown in the previous embodiment. Further, the weak portion 34 which constitutes the indicator 30 of modeling element 101 is formed by two recesses 31, one recess facing in the coronal direction of element 101 (not shown) and the other recess facing in the apical direction.

Figure 3 shows yet another embodiment of a modeling element. The modeling element 201 does not have a weak portion but instead a void 36 formed as a circumferential channel 36 between the modeling portion 20 and the coupling portion 10. However, the circumferential channel 36 can additionally be designed as a weak portion 34 that allows tearing off screw channel 4 and/or collar 40 of the modeling portion 20 from modeling element 201.

In any case, channel 36 indicates to the dental expert removing material away from modeling element 201 how far material may actually be removed. When reaching channel 36, the tool used for removal of material from modeling element 201 may also generate an audible sound caused, for example, by different abrasive properties of the coupling portion 10. Although not necessary, the different colors of modeling element 201 shown in figure 3 may also represent a further visual indicator 30. Additionally or alternatively, the different appearance of coupling portion 10 and modeling portion 20 of modeling element 201 may represent different materials or material properties.

If collar 40 in figure 3 is completely removed, possibly including the screw channel 4 of modeling portion 20, the surface of channel 36 on the side of coupling portion 10 may be used for connecting a modeling extension to modeling element 201 having a shape that is more apt to the dental situation of a patient. Taking this approach, there is no need for the dental expert to create an interface surface for the modeling extension since it is already present as one of the walls of channel 36.

If produced as a single piece, the modeling elements of the present invention may be fabricated by 3-D printing or injection molding. 3-D printing is particularly advantageous if two different materials are used for making modeling element 201 and/or if a void 36 is present and should be completely embedded within the material of the respective modeling element.

The skilled person will appreciate that coupling portion 10 off modeling element 201 may also be designed like the coupling portion 10 of modeling element 101.

Although indicator 30 of the exemplary embodiments described above is either placed within or at the border of modeling portion 20, there may also be an indicator 30 present within coupling portion 10 as long as sufficient strength for the dental restoration can be achieved. Preferably, the coupling portion 10 connects directly to an implant so that a dental technician is able to produce a one-piece prosthesis of a single tooth or several teeth. Nonetheless, it is also possible to indirectly connect the coupling portion to the implant by using spacers to manipulate the distance and/or the angle of the modeling element 1 in relation to said implant or implant analog.

All modeling elements of the present invention provide the dental expert with low-cost off-the-shelf products. However, unlike modeling elements from the prior art, the modeling elements of the present invention allow for a selective adaptation of the modeling element's geometry, i.e. shape and/or dimension, wherein an indicator defines to which extent material may be removed from the modeling element without risking insufficient strength of the dental restoration to be produced. For example, the dental expert will be in a position to determine if further removal of a wall thickness, a screw channel, a coupling portion, etc. is still possible. Thus, the dental expert is prevented from creating a model of a dental restoration that does not meet the required quality for a dental treatment.

### REFERENCE SIGNS

- 1: modeling element
- 2: coronal end
- 3: apical end
- 4: screw channel
- 5: screw seat
- 6: anti rotation means
- 7: anti translation means
- 10: coupling portion
- 20: modeling portion
- 30: indicator
- 31: recess
- 32: removable section
- 33: engagement recess
- 34: weak portion
- 36: void
- 40: collar
- X,Z: radial direction of the modeling element
- Y: longitudinal direction of the modeling element

## Claims

1. Modeling element (1) for creating a master geometry of a dental restoration or for creating a temporary dental restoration, the modeling element comprising a coronal end (2), an apical end (3), a coupling portion (10) and a modeling portion (20), the modeling portion having an initial shape and dimension,
wherein at least part of the modeling portion further comprises an indicator (30) defining the maximum allowable removal of material from the modeling element.

2. The modeling element according to claim 1, wherein the indicator (30) is configured to provide tactile, audible and/or visual feedback upon removal of the maximum allowable amount of material from the modeling element.

3. The modeling element according to claim 1 or 2, wherein the minimum allowable dimension resulting from the maximum allowable removal of material defined by said indicator (30) of said modeling element (1) depends on the material properties of the dental restoration to be produced on the basis of said model.

4. The modeling element according to one of the preceding claims, wherein the indicator (30) indicates at least one removable section of the modeling element (1).

5. The modeling element according to claim 4, wherein the removable section (32) is formed as a collar situated at a distal end of the modeling portion (20), said collar comprising a weak portion (34) for separating said collar from the remaining modeling element (1).

6. The modeling element according to claim 5, wherein the weak portion (34) is a reduced cross section at the base of said collar, where the collar is attached to the remaining part of the modeling element (1).

7. The modeling element according to claim 5 or 6, wherein said collar (32) defines an engagement recess (33) extending in the longitudinal direction (Y) of said modeling element (1), preferably throughout said collar.

8. The modeling element according to one of the preceding claims, wherein said indicator (30) is formed by a difference in material properties.

9. The modeling element according to one of the preceding claims, wherein said indicator (30) indicates the maximum allowable removal of material by a void (36) located between the allowable amount of removable material and the remaining modeling element (1).

10. The modeling element according to one of the preceding claims, wherein the indicator (30) extends into the coupling portion (10).

11. Method for creating a master geometry of a dental restoration or, for creating a temporary restoration, based on a modeling element (1), comprising the steps:
- providing a model of at least a part of the oral situation of a patient, the model comprising at least one implant analog or, at least one implant,
- providing a modeling element (1) comprising an indicator (30) defining the maximum allowable removal of material from said modeling element,
- attaching said modeling element (1) to said implant analog or to said implant,
- creating said master geometry which represents the final dental restoration or creating said temporary restoration,
- removing material from said modeling element until said indicator (30) provides feedback that the minimum allowable dimension has been reached at a location of removal of material from said modeling element.

12. The method according to claim 11, wherein said modeling element (1) is a sleeve and the model is created by adding modeling material or a temporary restoration material, preferably wax or cement, composite or the like, to said sleeve.

13. The method according to claim 11 or 12, further comprising the step of scanning said model of the dental restoration to create a CAD/CAM model for producing the dental restoration.

14. The method according to claim 11 or 12, further comprising the step of installing the temporary restoration in a patient's mouth.

15. The method according to claim 13, wherein the parameters of said CAD/CAM model of the dental restoration are matched to the production technique to be used for producing the dental restoration.
